# EUROPÄISCHE PATENTSCHRIFT

(11) **EP 1 686 288 B1**
(45) Veröffentlichungstag und Bekanntmachung des Hinweises auf die Patenterteilung: **21.05.2008**
(21) Anmeldenummer: 06000668.1
(22) Anmeldetag: 13.01.2006
(51) Int. Cl.: F16H 19/02, F16H 25/24

(54) **Getriebe mit grossem Übersetzungsverhältnis**
Transmission with high ratio
Transmission à forte démultiplication

(30) Priorität: 28.01.2005 DE 202005001387 U
(43) Veröffentlichungstag der Anmeldung: 02.08.2006
(73) Patentinhaber: Rollax GmbH & Co. KG, 33607 Bielefeld (DE)
(72) Erfinder: Schwarzbich, Jörg, 33615 Bielefeld (DE); Benjamin, Milto, 33790 Halle (DE)
(74) Vertreter: Wiebusch, Manfred

(56) Entgegenhaltungen:
- EP-A- 0 709 537
- DE-A1- 3 836 372
- DE-A1- 3 841 460
- FR-A- 2 549 926
- US-A- 3 439 550
- US-A- 4 866 456

## Beschreibung

Die Erfindung betrifft ein Getriebe mit einer von mindestens einer Mutter angetriebenen Gewindespindel, die entlang einer Kreisbahn gebogen und relativ zu der Mutter um den Mittelpunkt dieser Kreisbahn drehbar ist.

Getriebe dieser Art sind aus gattungsbildenten US 4 866 456 A und US 3 439 550 A bekannt und dienen dort zum Verschwenken einer Antenne bzw. eines Spiegels die oder der an der Gewindespindel gehalten ist. DE 38 41 460 A1 beschreibt ein Getriebe, bei dem als Gewindespindel eine biegsame Welle vorgesehen ist.

Für bestimmte Anwendungsfälle, beispielsweise bei Sitzverstellern oder verstellbaren Lordosenstützen für Kraftfahrzeuge, benötigt man Stellantriebe, die nur geringe Verstellwege zurückzulegen brauchen, aber dabei relativ hohe Kräfte aufbringen müssen. Als Antriebsquelle werden handelsübliche Elektromotoren eingesetzt, deren Kosten und Platzbedarf mit steigendem Drehmoment dramatisch zunehmen. Damit kleinbauende und kostengünstige hochdrehende Elektromotoren eingesetzt werden können, benötigt man Getriebe mit einem großen Weguntersetzungsverhältnis und einem entsprechend großes Kraftübersetzungsverhältnis. Bei herkömmlichen Spindeltrieben erreicht man große Untersetzungsverhältnisse dadurch, daß die Gewindesteigung der Gewindespindel möglichst klein gemacht wird. Bei Spindeltrieben sind jedoch der Verringerung der Gewindesteigung Grenzen gesetzt, weil mit kleinerer Steigung auch die mechanische Belastbarkeit der Gewindegänge abnimmt. Als Untersetzungsgetriebe werden deshalb bisher bevorzugt mehrstufige Zahnradgetriebe eingesetzt. Nachteilig sind daran jedoch die hohe Komplexität des Getriebes, die große Anzahl und die große Träge Masse der beweglichen Teile, eine Akkumulation des Zahnradspiels sowie eine relativ hohe Geräuschentwicklung.

Aufgabe der Erfindung ist es deshalb, ein kleinbauendes, einfach aufgebautes Getriebe mit großem Untersetzungsverhältnis zu schaffen. Insbesondere soll dieses Getriebe in Verbindung mit einem hochdrehenden Elektromotor zur Wölbungsverstellung einer Wölbplatte einer Lordosenstütze für Kraftfahrzeugsitze eingesetzt werden.

Erfindungsgemäß wird die gestellte Aufgabe bei einem Getriebe gemäß Anspruch 1 gelöst.

Dadurch kann ein vergleichsweise langer Verstellweg der Gewindespindel auf kompaktem Raum erreicht werden. Die Gewindespindel führt eine Bewegung um den gedachten Mittelpunkt der Kreisbahn aus. Diese Umsetzung der Antriebsbewegung in eine Drehbewegung ergibt ein effektive Untersetzung bei geringer Teilezahl des Getriebes. Das Innengewinde der Mutter steht mit der Gewindespindel in Gewindeeingriff. Da das Innengewinde die Gewindespindel umgreift, ergibt sich eine vergleichsweise große Kraftübertragungsfläche.

Das Gewinde weist ein Abtriebselement auf, das von der Gewindespindel mitbewegt wird und an dem auf einem gegenüber der Kreisbahn verringerten Radius eine Kraft oder ein Drehmoment zur Verfügung gestellt wird. Dadurch wird in besonders vorteilhafter Weise ausgenutzt, daß die Bewegung der gebogenen Gewindespindel entlang der Kreisbahn in eine Drehbewegung umgesetzt werden kann, wobei durch das Verhältnis der Radien der Kreisbahn der Gewindespindel und des Ortes, an dem die Kraft oder das Drehmoment an dem Abtriebselement zur Verfügung gestellt wird, die Untersetzung des Getriebes nochmals vergrößert wird.

An dem Abtriebselement ist ein abtriebsseitiges Zugelement gehalten. Dabei kann es sich beispielsweise um das Zugseil eines Bowdenzuges handeln. Das Abtriebselement kann dabei beispielsweise eine Kontur aufweisen, auf die das Zugelement aufrollbar oder aufwickelbar ist. Dadurch wird die Drehbewegung der gebogenen Gewindespindel in eine lineare Bewegung des Zugelements umgesetzt, während zugleich in der oben genannten Weise aufgrund des Radienverhältnisses die Untersetzung vergrößert werden kann.

Vorteilhafte Ausgestaltungen der Erfindung ergeben sich aus den Unteransprüchen.

In einer bevorzugten Ausführungsform ist ein Halteelement um den Mittelpunkt der Kreisbahn drehbar gelagert und trägt die Gewindespindel. Die Gewindespindel ist somit stabil und unabhängig von der Mutter gehalten. Das Halteelement kann beispielsweise durch das Abtriebselement gebildet sein. Das Halteelement kann beispielsweise mindestens einen radialen, speichenartigen Haltearm aufweisen. Beispielsweise ist das Halteelement auf einer abtriebsseitigen Welle befestigt.

Die Mutter kann beispielsweise je nach Kraftrichtung an einem oder zwischen zwei Lagern gelagert sein, welche von der Gewindespindel durchsetzt sind. Dies hat den Vorteil, daß die Mutter sehr gut abgestützt ist. Dadurch ist eine hohe Kraft auf einen kleinen Raum ausübbar. Vorzugsweise sind die Lager Axiallager. Dies erlaubt eine besonders große Kraftaufnahme.

Vorzugsweise weist die Mutter eine Verzahnung auf, in die ein Antriebselement eingreift. Dadurch kann sich nochmals eine Untersetzung ergeben. Die Verzahnung kann beispielsweise eine Außenverzahnung oder eine Randverzahnung sein. Das Antriebselement kann beispielsweise ein Zahnrad sein, das mit der Verzahnung der Mutter kämmt. Alternativ kann das Antriebselement eine Schnecke sein, deren Schneckengewinde mit der Verzahnung der Mutter in Eingriff steht. Hierdurch ergibt sich nochmals eine vergrößerte Untersetzung des Getriebes.

Der Stellweg des Getriebes kann dadurch begrenzt sein, daß die Gewindespindel ein Kreissegment bildet.

Gemäß einer Weiterentwicklung der Erfindung ist die Gewindespindel von mindestens zwei Muttern angetrieben. Da die Gewindespindel entlang einer Kreisbahn gebogen ist, können entlang dieser Kreisbahn mehrere Muttern angeordnet sein.

Im folgenden werden Ausführungsbeispiele der Erfindung anhand der Zeichnung näher erläutert.

Es zeigen.
- Fig. 1: eine Draufsicht auf ein erfindungsgemäßes Getriebe mit einer Gewindespindel, die ein Kreissegment bildet;
- Fig. 2: einen Schnitt durch ein Halteelement des Getriebes längs der Linie II-II in Fig. 1
- Fig. 3: eine Draufsicht auf ein Getriebe gemäß einer anderen Ausführungsform;
- Fig. 4: eine Draufsicht auf ein Getriebe gemäß einer weiteren Ausführungsform; und
- Fig. 5: eine Seitenansicht des Getriebes aus Fig. 4.

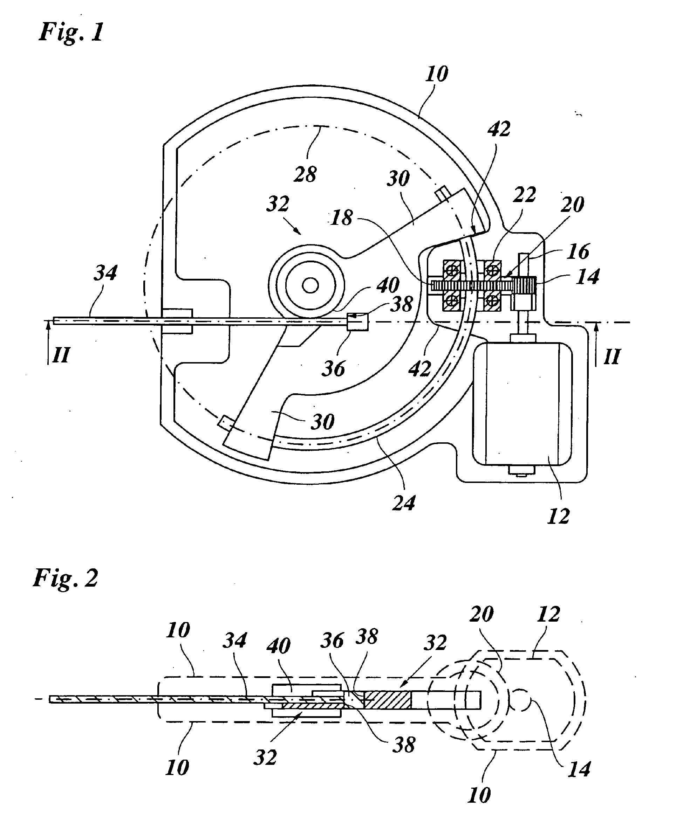

Das in Figur 1 gezeigte Getriebe weist ein Gehäuse 10 auf, in dem ein kleinbauender Elektromotor 12 angeordnet ist. Ein Antriebselement des Getriebes wird durch ein Zahnrad 14 gebildet, das auf einer Welle 16 des Motors 12 sitzt. Das Zahnrad 14 kämmt mit einer Außenverzahnung 18 einer Mutter 20. Beidseitig der Mutter 20 sind Axiallager 22 angeordnet, mit denen die Mutter 20 drehbar im Gehäuse 10 gelagert ist.

Die Axiallager 22 und die Mutter 20 sind von einer Gewindespindel 24 durchsetzt. Dabei steht ein Innengewinde der Mutter 20 mit der Gewindespindel 24 in Gewindeeingriff. Die Gewindespindel 24 ist entlang einer Kreisbahn 28 gebogen und bildet ein Kreissegment.

Die Gewindespindel 24 wird an ihren Enden jeweils von speichenartigen Haltearmen 30 eines Halteelements 32 gehalten, welches drehbar um den Mittelpunkt der Kreisbahn 28 gelagert ist und die Gewindespindel 24 trägt.

An dem Halteelement 32, welches die Funktion eines Abtriebselements hat, ist ein abtriebsseitiges Zugseil 34 gehalten. Das Zugseil 34 weist ein verdicktes Ende 36 auf, mit dem es in einer Aufnahme 38 des Halteelements 32 verankert ist. In der in Figur 1 gestellten Stellung des Getriebes verläuft das Zugseil geradlinig nach links und berührt dabei eine rollenförmige Kontur 40, die an der Oberseite des Halteelements 32 vorspringt.

Wird die Gewindespindel 24 nun durch den Motor 12 entgegen dem Uhrzeigersinn in Figur 1 in Bewegung gesetzt, so wird das Zugseil 34 auf der Kontur 40 aufgewickelt, so daß es links von der Kontur 40 weiterhin denselben geradlinigen Verlauf hat. Auf diese Weise wird eine Drehbewegung der Gewindespindel 24 und damit des Halteelements 32 in eine lineare Bewegung des Zugseils 34 umgesetzt.

Dabei findet eine Untersetzung zwischen dem Zahnkranz 14 und der Mutter 20, beim Gewindeeingriff des Innengewindes der Mutter 20 mit der Gewindespindel 24 und durch das Radienverhältnis zwischen der Kreisbahn 28 und dem deutlich geringeren Radius, auf dem das Zugseil 34 aufgewickelt wird, statt. Auf diese Weise wird eine sehr hohe Untersetzung auf kleinem Raum mit einer minimalen Anzahl von beweglichen Teilen erreicht.

Das Gehäuse 10 weist Anschlagskonturen 42 für die Haltearme 30 auf, die den Verstellweg der Gewindespindel 24 begrenzen. In der in Figur 1 gezeigten Stellung befindet sich das Halteelement 32 im Uhrzeigersinn am Anschlag.

Figur 2 zeigt das Halteelement 32 im Querschnitt. Dabei ist insbesondere die Auf nahme 38 für das verdickte Ende 36 des Zugseils 34 zu erkennen. In der gezeigten Stellung liegt das Zugseil 34 auf einem flachen Bereich des Halteelements 32 auf. Hinter dem Zugseil ist die Kontur 40 zu erkennen. Mit gestrichelten Linien sind die Mutter 20 und das Zahnrad 14 angedeutet. Auch der Motor 12 und das beispielsweise aus zwei Halbschalen bestehende Gehäuse 10 sind durch gestrichelte Umrisse angedeutet.

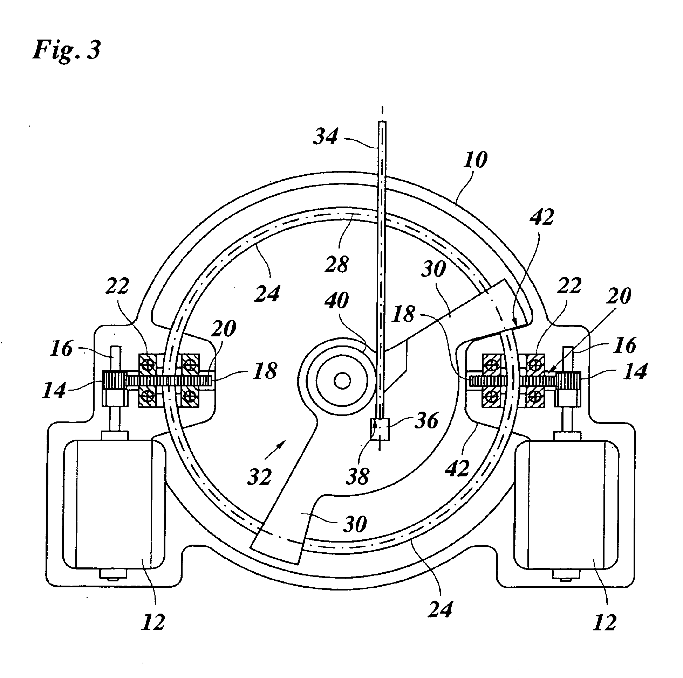

Figur 3 zeigt ein Ausführungsbeispiel, bei dem die Gewindespindel 24 einen Vollkreis bildet. Gegenüber der ersten Mutter 20 ist eine zweite Mutter 20 auf der Gewindespindel 24 angeordnet, die in gleicher Weise gelagert und durch ein Zahnrad 14 eines zweiten Motors 12 angetrieben ist. Die auf die Gewindespindel 24 aufgebrachte Kraft kann dadurch verdoppelt werden. Das Halteelement 32 ist vergleichbar dem Halteelement aus Figur 1 aufgebaut, jedoch ist das Zugseil 34 auf einer Ebene oberhalb der Gewindespindel 24 angebracht und hat ferner eine andere Richtung.

Die beschriebenen Getriebe können beispielsweise dazu benutzt werden, mit Hilfe des Zugseils 34 die entgegengesetzten Enden einer Wölbplatte einer Lordosenstütze zusammenzuziehen, um so die Wölbung zu vergrößern. Besonders vorteilhaft ist dabei, daß sich während der Bewegung des Getriebes der Verlauf des Zugseils 34 nicht ändert und dieses auch nicht in sich gedreht wird. Anstelle der Zugbewegung des Zugseils 34 oder eines anderen Zugelements kann jedoch wahlweise auch eine Drehbewegung einer Achse des Halteelements 32 abtriebsseitig genutzt werden.

Je nach Kraftrichtung kann wahlweise auf eines der Axiallager 22 verzichtet werden. So kann beispielsweise auf das in Figur 1 nahe dem Ende der Welle 16 angeordnete Axiallager 22 verzichtet werden, da bei der Ausübung einer Zugkraft auf das Zugseil 34 das motorseitige Axiallager 22 die Reaktionskraft der Mutter 20 aufnimmt.

Die Kontur 40, die in den beschriebenen Beispielen einen einheitlichen Radius auf weist, kann wahlweise einen variierenden Radius aufweisen. Beispielsweise kann sie spiralförmig sein. Dadurch läßt sich erreichen, daß die Untersetzung während des Aufwickelns des Zugseils 34 auf die Kontur variiert, wodurch die auf das Zugseil 34 aufgebrachte Kraft gesteuert wird. Auf diese Weise kann ein gewünschter Verlauf der aufgebrachten Kraft während des Zugvorgangs vorgegeben werden.

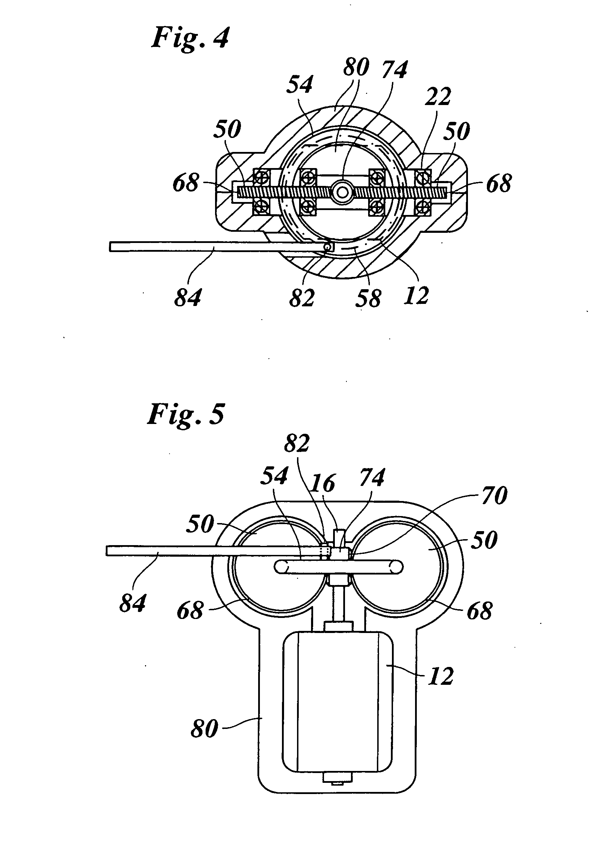

Figuren 4 und 5 zeigen ein weiteres Ausführungsbeispiel, bei dem zwei Muttern 50 auf einer Gewindespindel 54 angeordnet sind. Die Muttern 50 weisen jeweils ein Innengewinde auf, das mit der Gewindespindel 54 in Gewindeeingriff steht. Die Gewindespindel 54 beschreibt einen Vollkreis und verläuft entlang einer Kreisbahn 58, deren Radius nur geringfügig größer als der Außenradius der Muttern 50 ist. Dabei ist jeweils die eine der Muttern 50 das Halteelement der Gewindespindel in Bezug auf die jeweils andere Mutter 50.

Die Muttern 50 weisen jeweils eine Außenverzahnung 68 mit schräggestellten Zähnen auf. Die Außenverzahnungen 68 beider Muttern 50 stehen in Eingriff mit einem zwischen ihnen angeordneten Schneckengewinde 70 einer Schnecke 74, die auf einer Welle 16 eines Elektromotors 12 sitzt. Der Elektromotor 12 ist in Figur 4 gestrichelt angedeutet. Ähnlich wie bei den anderen Ausführungsbeispielen sind die Muttern 50 jeweils beidseitig zwischen Axiallagern 22 gehalten, die in Figur 5 nicht dargestellt sind. Die Axiallager 22 sind in einem Gehäuse 80 gehalten.

Die Gewindespindel wird durch die Innengewinde der Muttern 50 und durch eine Führungskontur des Gehäuses 80 geführt. In Figur 5 ist nur der hinter der Zeichenebene liegende Teil des Gehäuses 80 dargestellt.

Ein Abtriebselement wird durch eine an einem Stift 82 gehaltene Zug- und Druckstange 84 gebildet. Der Stift 82 ragt aus der Gewindespindel parallel zu ihrer Rotationsachse heraus.

Bei diesem Ausführungsbeispiel wird die Kraft des Elektromotors 12 durch zwei Muttern 50 auf die Gewindespindel 54 übertragen. Durch den sehr kompakten Aufbau kann auf kleinstem Raum ein hohes Drehmoment an der Gewindespindel 54 zur Verfügung gestellt werden. Dabei ergeben sich Untersetzungen beim Eingriff des Schneckengewindes 70 in die Außenverzahnung 68 der Mutter 50, aufgrund des Radienverhältnisses zwischen der Außenverzahnung 68 und dem Innengewinde der Mutter 50 und durch den Gewindeeingriff zwischen dem Innengewinde und der Gewindespindel 54.

## Patentansprüche

1. Getriebe mit einer von mindestens einer Mutter (20; 50) angetriebenen Gewindespindel (24; 54), die entlang einer Kreisbahn (28; 58) gebogen und relativ zu der Mutter (20; 50) um den Mittelpunkt dieser Kreisbahn (28; 58) drehbar ist, wobei das Getriebe ein Abtriebselement (32) aufweist, das von der Gewindespindel (24) mitbewegt wird und **dadurch gekennzeichnet, daß** an dem Abtriebselement (32) auf einem gegenüber der Kreisbahn (28) verringerten Radius ein abtriebsseitiges Zugelement (34) gehalten ist.

2. Getriebe nach einem der vorstehenden Ansprüche, **dadurch gekennzeichnet, daß** das Abtriebselement (32) um den Mittelpunkt der Kreisbahn (28) drehbar gelagert ist und die Gewindespindel (24) trägt.

3. Getriebe nach einem der vorstehenden Ansprüche, **dadurch gekennzeichnet, daß** die Mutter (20; 50) an mindestens einem Lager (22) gelagert ist, welches von der Gewindespindel (24; 54) durchsetzt ist.

4. Getriebe nach einem der vorstehenden Ansprüche, **dadurch gekennzeichnet, daß** die Mutter (20; 50) eine Verzahnung (18; 68) aufweist, in die ein Antriebselement (14; 74) eingreift.

5. Getriebe nach Anspruch 4, **dadurch gekennzeichnet, daß** das Antriebselement (14) ein Zahnrad ist, das mit der Verzahnung (18) der Mutter (20) kämmt.

6. Getriebe nach Anspruch 5, **dadurch gekennzeichnet, daß** das Antriebselement (74) eine Schnecke ist, deren Schneckengewinde (70) mit der Verzahnung (68) der Mutter (50) in Eingriff steht.

7. Getriebe nach einem der vorstehenden Ansprüche, **dadurch gekennzeichnet, daß** die Gewindespindel (24) ein Kreissegment bildet.

8. Getriebe nach einem der vorstehenden Ansprüche, **dadurch gekennzeichnet, daß** die Gewindespindel (24; 54) von mindestens zwei Muttern (20; 50) angetrieben ist.

## Claims

1. A transmission having a threaded spindle (24; 54) which is driven by at least one nut (20; 50) and curved along a circular path (28; 58) and is rotatable relative to the nut (20; 50) about the centre point of the circular path (28; 58), the transmission having a driven member (32) which is moved by and with the threaded spindle (24), **characterized in that** a traction element (34) on the driven side is held on the driven member (32) at a radius which is reduced with respect to the circular path (28).

2. A transmission according to any one of the preceding claims, **characterized in that** the driven member (32) is supported to be rotatable about the centre point of the circular path (28) and carries the threaded spindle (24).

3. A transmission according to any one of the preceding claims, **characterized in that** the nut (20; 50) is supported on at least one bearing (22) which is traversed by the threaded spindle (24; 54).

4. A transmission according to any one of the preceding claims, **characterized in that** the nut (20; 50) has toothing (18; 68) in which a drive member (14; 74) engages.

5. A transmission according to claim 4, **characterized in that** the drive member (14) is a gearwheel which meshes with the toothing (18) of the nut (20).

6. A transmission according to claim 5, **characterized in that** the drive member (74) is a worm, the worm thread (70) of which is engaged with the toothing (68) of the nut (50).

7. A transmission according to any one of the preceding claims, **characterized in that** the threaded spindle (24) forms a segment of a circle.

8. A transmission according to any one of the preceding claims, **characterized in that** the threaded spindle (24; 54) is driven by at least two nuts (20; 50).

## Revendications

1. Transmission avec une broche filetée (24 ; 54) entraînée par au moins un écrou (20 ; 50) et qui peut tourner le long d'une trajectoire (28 ; 58), de manière courbe et par rapport à l'écrou (20 ; 50), autour du centre de cette trajectoire circulaire (28 ; 58), la transmission comportant un élément de sortie (32) qui est entraîné par la broche filetée (24), **caractérisée en ce qu'**un élément de traction (34) côté sortie est maintenu sur l'élément de sortie (32), sur un rayon réduit par rapport à la trajectoire circulaire (28).

2. Transmission selon la revendication 1, **caractérisée en ce que** l'élément de sortie (32) est monté tournant autour du centre de la trajectoire circulaire (28) et porte la broche filetée (24).

3. Transmission selon l'une quelconque des revendications précédentes, **caractérisée en ce que** l'écrou (20 ; 50) est monté sur au moins un palier (22) qui est traversé par la broche filetée (24 ; 54).

4. Transmission selon l'une quelconque des revendications précédentes, **caractérisée en ce que** l'écrou (20 ; 50) présente une denture (18 ; 68) dans laquelle s'engage un élément d'entraînement (14 ; 74).

5. Transmission selon la revendication 4, **caractérisée en ce que** l'élément d'entraînement (14) est une roue dentée qui engrène avec la denture (18) de l'écrou (20).

6. Transmission selon la revendication 5, **caractérisée en ce que** l'élément d'entraînement (74) est une vis sans fin dont le filetage de vis (70) est en prise avec la denture (68) de l'écrou (50).

7. Transmission selon l'une quelconque des revendications précédentes, **caractérisée en ce que** la broche filetée (24) forme un segment de cercle.

8. Transmission selon l'une quelconque des revendications précédentes, **caractérisée en ce que** la broche filetée (24 ; 54) est entraînée par au moins deux écrous (20 ; 50).
